Europäisches Patentamt

European Patent Office

Office européen des brevets

(11) Veröffentlichungsnummer: **0 303 929 B1**

# EUROPÄISCHE PATENTSCHRIFT

(45) Veröffentlichungstag der Patentschrift: **16.12.92**

(51) Int. Cl.5: **B29C 47/10**, B29B 13/10

(21) Anmeldenummer: **88112875.5**

(22) Anmeldetag: **08.08.88**

---

(54) Vorrichtung zum Aufbereiten thermoplastischer Kunststoffgüter.

---

(30) Priorität: **18.08.87 CH 3174/87**

(43) Veröffentlichungstag der Anmeldung:
**22.02.89 Patentblatt 89/08**

(45) Bekanntmachung des Hinweises auf die
Patenterteilung:
**16.12.92 Patentblatt 92/51**

(84) Benannte Vertragsstaaten:
**AT DE ES FR GB IT**

(56) Entgegenhaltungen:
EP-A- 0 045 734    EP-A- 0 123 771
WO-A-88/02684     DE-A- 2 052 031
DE-A- 3 525 554    FR-A- 2 418 707

(73) Patentinhaber: **INDUPACK AG**
**Gartenstrasse 2**
**CH-6300 Zug(CH)**

(72) Erfinder: **Petschner, Goetz**
**Im Walder 28**
**CH-8702 Zollikon(CH)**

(74) Vertreter: **Petschner, Goetz**
**Patentanwaltsbüro G. Petschner Wannen-**
**strasse 16**
**CH-8800 Thalwil(CH)**

Rank Xerox (UK) Business Services

## Beschreibung

Die vorliegende Erfindung betrifft eine Vorrichtung zum Aufbereiten von thermoplastischem Kunststoffgut, mit einem Aufnahmebehälter, in dem nahe seinem Boden ein, um die Behälterachse drehendes Zerkleinerungs- und Mischwerkzeug angeordnet ist und mit dem durch eine Oeffnung in seinem Mantel hindurch ein Schneckenextruder in Strömungsverbindung steht.

Das von oben in den Aufnahmebehälter derartiger Vorrichtungen eingebrachte Kunststoffgut wird von dem Zerkleinerungs- und Mischwerkzeug im Bodenbereich des Aufnahmebehälters erfasst, zerkleinert und durchgemischt, wobei eine Erwärmung des Gutes stattfindet. Die Gutteile werden dabei durch das Zerkleinerungs- und Mischwerkzeug einerseits um die vertikale Achse des Aufnahmebehälters entlang des Behältermantels bewegt und anderseits einer Umwälzbewegung in Radialebenen unterworfen, so dass neben einem guten Mischeffekt auch ein günstiger thermischer Wirkungsgrad sichergestellt werden kann.

Das so aufbereitete Gut soll dann kontinuierlich an den Schneckenextruder abgegeben und gleichmässig ausgetragen werden.

Hierfür wurde bereits vorgeschlagen, den Schneckenextruder radial zur Behälterachse anzuordnen, wobei gemäss EU-PS 0045734 der Extruderzylinder mit seiner Beschickungsöffnung weit in den Aufnahmebehälter hineinragt, wogegen bei der Anordnung gemäss AT-PS 375867 die Beschickungsöffnung des Extruders bündig mit der Innenwandung der Beschickungsöffnung ist.

Beide Ausführungsvarianten sind strömungstechnisch bezüglich im Aufnahmebehälter umlaufendem Kunststoffgut höchst ungünstig und lassen eine gleichmässige, kontinuierliche Austragung nicht zu.

Aufgabe der vorliegenden Erfindung ist es nun, den vorgenannten Nachteilen abzuhelfen und eine Vorrichtung der vorgenannten Art zu schaffen, welche eine einwandfreie, absolut gleichmässige, von Temperatur und Umlaufgeschwindigkeit unabhängige und kontinuierliche Beschickung des Schneckenextruders gewährleistet.

Dies wird erfindungsgemäss dadurch erreicht, dass der, die Extruderschnecke umgebende Zylinder des Schneckenextruders mit seiner stirnseitigen Beschickungsöffnung wenigstens angenähert tangential an der Innenwandung des Aufnahmebehälters mündet.

Durch diese Massnahmen ist nunmehr eine gleichmässige Füllung der Extruderschnecke gewährleistet, indem die tangentialen Strömungskomponenten im umlaufenden Kunststoffgut letzteres im Bereich der durch die stirnseitige Beschickungsöffnung des Extruderzylinders unterbrochenen Behälterwandung gegen die Extruderschnecke verschieben und diese füllen.

Je nach Anlage, zu verarbeitedem Material, Leistung u. dgl. können weitere, unterstützende Massnahmen getroffen werden.

So ist es ohne weiteres möglich, dass die stirnseitige Beschickungsöffnung des Zylinders mit der Innenwandung des Aufnahmebehälters bündig ist, oder dass die stirnseitige Beschickungsöffnung des Zylinders wenigstens teilweise in den Aufnahmebehälter hineinragt, wobei die der Umlaufströmung im Aufnahmebehälter entgegenstehenden Wandungsabschnitte des Zylinders eine Leitwand für die Umlenkung des Kunststoffgutes in den Zylinder bilden.

Weiter kann die Ausbildung hier aber auch so sein, dass das freie Ende der Extruderschnecke bezüglich der stirnseitigen Beschickungsöffnung resp. der Leitwand des Zylinders zurückversetzt ist.

Um eine zusätzliche Leitfläche zu gewinnen, kann ferner vorgesehen sein, dass sich der Zylinder in seinem der Strömung im Aufnahmebehälter entgegenstehenden Anschlussbereich trichterförmig erweitert.

Beispielsweise Ausführungsformen des Erfindungsgegenstandes sind nachfolgend anhand der Zeichnung näher erläutert. Es zeigen:

Fig. 1    eine erfindungsgemässe Vorrichtung zum Aufbereiten von thermoplastischem Kunststoffgut, im Vertikalschnitt entlang der Extruderachse;

Fig. 2    diese Vorrichtung im Vertikalschnitt senkrecht zur Extruderachse;

Fig. 3    eine erste Ausführungsvariante der Anordnung gemäss Fig. 1; und

Fig. 4    eine weitere Ausführungsvariante der Anordnung gemäss Fig. 1.

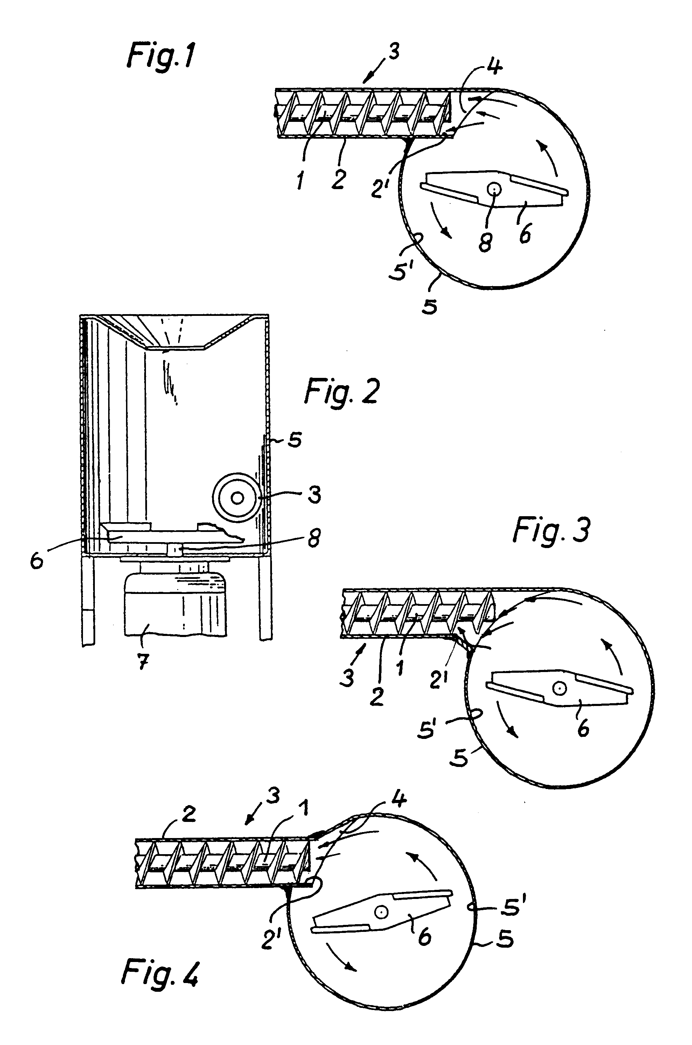

Die in den Fig. 1 und 2 dargestellte Vorrichtung besteht im wesentlichen aus einem Aufnahmebehälter 5, in dessen Bodennähe ein über einen Motor 7 antreibbares, um die Behälterachse drehbar, auf der Motorwelle 8 aufsitzendes Zerkleinerungs- und Mischwerkzeug 6 vorgesehen ist. Oberhalb dieses Zerkleinerungs- und Mischwerkzeuges 6 ragt ein Schneckenextruder 3 mit seiner stirnseitigen Beschickungsöffnung 4 in den Aufnahmebehälter 1.

Erfindungswesentlich ist hierbei, dass der, die Extruderschnecke 1 umgebende Zylinder 2 des Schneckenextruders 3 mit seiner stirnseitigen Beschickungsöffnung 4 wenigstens angenähert tangential an der Innenwandung 5′ des Aufnahmebehälters 5 mündet.

Bei den in Fig. 1 und 4 gezeigten Anordnungen ist dabei vorgesehen, dass diese stirnseitige Beschickungsöffnung 4 des Zylinders 2 wenigstens teilweise in den Aufnahmebehälter 5 hineinragt, wobei die der Umlaufströmung im Aufnahmebehälter 5 entgegenstehenden Wandungsabschnitte 2′ des Zylinders 2 eine Leitwand für die Umlenkung des Kunststoffgutes in den Zylinder bilden.

Unterschiedlich bei den Anordnungen gemäss den Fig. 1 und 4 ist, dass bei der Ausgestaltung nach Fig. 1 der Zylinder 2 des Schneckenextruders 3 direkt tangential in die Innenwandung 5′ des Aufnahmebehälters 5 übergeht, wogegen bei der Anordnung nach Fig. 4 der Zylinder 2 parallel zum vorgenannten nach Fig. 1 versetzt angeordnet ist. Hierbei ist diese angenähert tangentiale Anordnung funktionell etwa gleichwertig der direkt tangentialen Anordnung, kann sich aber konstruktiv als besser erweisen.

Jedenfalls kann in beiden Fällen die Anordnung so sein, dass das freie Ende der Extruderschnecke 1 bezüglich der stirnseitigen Beschickungsöffnung 4 resp. der Leitwand 2′ des Zylinders 2 zurückversetzt ist.

Weiter kann es vorteilhaft sein, anstelle der Ausgestaltung gemäss den Fig. 1 und 4 die Anordnung gemäss Fig. 3 so vorzunehmen, dass die stirnseitige Beschickungsöffnung 4 des Zylinders 2 mit der Innenwandung 5′ des Aufnahmebehälters 5 bündig ist.

Um dann auch hier eine, das Kunststoffgut umlenkende Leitwand 2′ zu schaffen, kann sich der Zylinder 2 in seinem der Strömung im Aufnahmebehälter 5 entgegenstehenden Anschlussbereich trichterförmig erweitern, wie dies Fig. 3 verdeutlicht.

Auf diese Weise ergibt sich eine Vorrichtung zum Aufbereiten von thermoplastischem Kunststoffgut, bei welcher vergleichsweise dem bekannten Stand der Technik bei jedem Betriebszustand eine optimale Füllung des austragenden Schneckenextruders erreicht wird.

Selbstverständlich sind hierbei im Rahmen der vorliegenden Erfindung eine Anzahl Modifikationen möglich, ohne dabei den Erfindungsgedanken zu verlassen. Hauptbedingung ist der wenigstens angenähert tangentiale Uebergang der stirnseitigen Beschickungsöffnung des Extruderzylinders an die Innenwandung des Aufnahmebehälters.

Wie weit sich dabei der Zylinder in den Aufnahmebehälter hineinerstreckt, ob dieser dann trichterförmig erweitert ist und wo bezüglich stirnseitiger Beschickungsöffnung des Zylinders die Extruderschnecke endet, unterliegt dann den Anforderungen an zu verarbeitendem Material, Volumen, Verarbeitungsgeschwindigkeit u. dgl.

**Patentansprüche**

1. Vorrichtung zum Aufbereiten von thermoplastischem Kunststoffgut, mit einem Aufnahmebehälter, in dem nahe seinem Boden ein, um die Behälterachse drehendes Zerkleinerungs- und Mischwerkzeug angeordnet ist und mit dem durch eine Oeffnung in seinem Mantel hindurch ein Schnekkenextruder in Strömungsverbindung steht, dadurch gekennzeichnet, dass der, die Extruderschnecke (1) umgebende Zylinder (2) des Schneckenextruders (3) mit seiner stirnseitigen Beschickungsöffnung (4) wenigstens angenähert tangential an der Innenwandung (5′) des Aufnahmebehälters (5) mündet.

2. Vorrichtung nach Anspruch 1, dadurch gekennzeichnet, dass die stirnseitige Beschickungsöffnung (4) des Zylinders (2) mit der Innenwandung (5′) des Aufnahmebehälters (5) bündig ist.

3. Vorrichtung nach Anspruch 1, dadurch gekennzeichnet, dass die stirnseitige Beschickungsöffnung (4) des Zylinders (2) wenigstens teilweise in den Aufnahmebehälter (5) hineinragt, wobei die der Umlaufströmung im Aufnahmebehälter (5) entgegenstehenden Wandungsabschnitte (2′) des Zylinders (2) eine Leitwand für die Umlenkung des Kunststoffgutes in den Zylinder bilden.

4. Vorrichtung nach Anspruch 3, dadurch gekennzeichnet, dass das freie Ende der Extruderschnecke (1) bezüglich der stirnseitigen Beschickungsöffnung (4) resp. der Leitwand (2′) des Zylinders (2) zurückversetzt ist.

5. Vorrichtung nach einem der vorangehenden Ansprüche 1 bis 4, dadurch gekennzeichnet, dass sich der Zylinder (2) in seinem der Strömung im Aufnahmebehälter (5) entgegenstehenden Anschlussbereich trichterförmig erweitert.

**Claims**

1. An apparatus for processing synthetic thermoplastic material, comprising a receiving container, containing a disintegrating and blending member, which is disposed near the bottom of the container and which rotates about the axis of the container and with which a screw extruder is in flow connection through an opening in the wall of the container; wherein the cylinder (2), surrounding the extruder screw (1) of the screw extruder (3), opens out with its front-end charging opening (4) at least approximately tangentially in the inside wall (5') of the receiving container (5).

2. The apparatus as defined in claim 1, wherein the front-end charging opening (4) of the cylinder (2) is flush with the inside wall (5') of the receiving container (5).

3. The apparatus as defined in claim 1, wherein the front-end charging opening (4) of the cylinder (2) extends at least partially in the receiving container (5); the wall part (2') of the cylinder (2), opposing the rotational flow in the receiving container (5), forming, thereby, a guiding wall for the deflection of the synthetic material into the cylinder.

4. The apparatus as defined in claim 3, wherein the free end of the extruder screw (1) is set back in regard to the front-end charging opening (4), respectively the guiding wall (2') of the cylinder (2).

5. The apparatus as defined in one of the foregoing claims 1 to 4, wherein the cylinder (2) widens funnel-shaped at its area of connection opposing the flow in the receiving container (5).

**Revendications**

1. Dispositif pour la préparation d'un produit en matière thermoplastique, avec un récipient de récupération, dans le fond duquel est disposé un outil mélangeur-broyeur rotatif autour de l'axe du récipient et avec lequel est reliée, pour la circulation, une extrudeuse à vis par l'intermédiaire d'une ouverture dans son enveloppe, caractérisé en ce que le cylindre (2) entourant la vis (1) d'extrudeuse de l'extrudeuse (3) à vis débouche d'une manière à peu près tangentielle dans la paroi interne 5' du récipient de récupération (5) par l'intermédiaire de son ouverture (4) de chargement sur la face frontale.

2. Dispositif selon revendication 1, caractérisé en ce que l'ouverture (4) de chargement du cylindre (2) sur la face frontale affleure avec la paroi interne (5') du récipient de récupération (5).

3. Dispositif selon revendication 1, caractérisé en ce que l'ouverture (4) de chargement du cylindre (2) sur la face frontale pénètre au moins partiellement dans le récipient de récupération (5), ce en quoi les sections (2') du cylindre (2) opposée au courant de circulation dans le récipient de récupération (5) forme une paroi conductrice pour le changement de direction du produit en matière plastique dans le cylindre.

4. Dispositif selon revendication 3, caractérisé en ce que l'extrémité libre de la vis d'extrudeuse (1) concernant l'ouverture (4) de chargement ainsi que la paroi conductrice (2') du cylindre (2) sur la face frontale est décalée vers l'arrière.

5. Dispositif selon l'une des revendications précédentes 1 à 4, caractérisé en ce que le cylindre (2) s'élargit en entonnoir dans sa zone de liaison opposée au courant dans le récipient de récupération (5).

Fig.1

Fig. 2

Fig. 3

Fig. 4